# EUROPÄISCHE PATENTSCHRIFT

(11) **EP 1 814 765 B1**
(45) Veröffentlichungstag und Bekanntmachung des Hinweises auf die Patenterteilung: **06.08.2008**
(21) Anmeldenummer: 05807886.6
(22) Anmeldetag: 31.10.2005
(51) Int. Cl.: B60R 25/02

(54) **VERFAHREN UND VORRICHTUNG ZUR LENKSÄULENVERRIEGELUNG**
METHOD AND DEVICE FOR LOCKING A STEERING COLUMN
PROCEDE ET DISPOSITIF DE VERROUILLAGE D'UNE COLONNE DE DIRECTION

(30) Priorität: 16.11.2004 DE 102004056138
(43) Veröffentlichungstag der Anmeldung: 08.08.2007
(73) Patentinhaber: Volkswagen AG, 38436 Wolfsburg (DE)
(72) Erfinder: BORNGRÄBER, Ralf, 38165 Lehre (DE); BIZENBERGER, Thomas, 38116 Braunschweig (DE); WISTRACH, Michael, 38108 Braunschweig (DE)
(74) Vertreter: Zucker, Volker
(86) Internationale Anmeldenummer: PCT/EP2005/011715
(87) Internationale Veröffentlichungsnummer: WO 2006/053638

(56) Entgegenhaltungen:
- EP-A- 1 396 399
- WO-A-90/09649
- US-A1- 2002 107 622

## Beschreibung

Die Erfindung betrifft ein Verfahren und eine Vorrichtung zur Lenksäulenverriegelung umfassend eine Elektronik, einen Sperrriegel, eine Antriebseinheit für den Sperrriegel und mindestens eine mechanische Komponente für eine Bewegung des Sperrriegels.

Es ist bekannt, eine Lenksäule eines Kraftfahrzeugs mechanisch durch einen Sperrriegel zu verriegeln, um einen ungewollten Zugriff auf ein Kraftfahrzeug durch Dritte zu verhindern. Die Verriegelung erfolgt durch den Fahrer mittels einer Bewegung der Lenksäule bei deaktivierter Zündung. Für einen verbesserten Komfort ist es daneben bekannt, die Lenksäule mittels einer Elektronik und einer Antriebseinheit für den Sperrriegel elektrisch zu verriegeln. Dabei greift der Sperrriegel einer Lenksäulenverriegelung beispielsweise bei Abziehen des Zündschlüssels. Aus Gründen der Sicherheit sind jedoch an eine elektrische Lenksäuleverriegelung hohe Anforderungen zu stellen.

Aus der WO 90/09649 A1 ist eine Vorrichtung zur Lenksäulenverriegelung bekannt, umfassend eine Elektronik, einen Sperrriegel, eine Antriebseinheit für den Sperrriegel und mindestens eine mechanische Komponente für eine Bewegung des Sperrriegels, wobei die Elektronik mit mindestens zwei Anschlüssen für unabhängige Sicherheitssignale ausgebildet ist, eine Freischaltung der Verriegelung abhängig von den Sicherheitssignalen ist und die Sicherheitssignale jeweils von mindestens einer Fahrzeuginformation abhängig sind.

Der Erfindung liegt daher das technische Problem zugrunde, ein Verfahren und eine Vorrichtung für eine elektrische Lenksäulenverriegelung mit verbesserter Sicherheit zu schaffen.

Die Lösung des Problems ergibt sich durch die Gegenstände mit den Merkmalen der Patentansprüche 1 und 11. Weitere vorteilhafte Ausgestaltungen der Erfindung ergeben sich aus den Unteransprüchen.

Hierfür wird die Lenksäule elektrisch durch eine Vorrichtung, umfassend eine Elektronik, einen Sperrriegel, eine Antriebseinheit für den Sperrriegel und mindestens eine mechanische Komponente für eine Bewegung des Sperrriegels, verriegelt, wobei die Elektronik mit mindestens zwei Anschlüssen für unabhängige Sicherheitssignale ausgebildet ist, eine Freischaltung der Verriegelung abhängig von den Sicherheitssignalen ist und die Sicherheitssignale jeweils von mindestens einer Fahrzeuginformation abhängig sind. Durch die Berücksichtigung von mindestens zwei voneinander unabhängigen Sicherheitssignalen wird eine Redundanz geschaffen und somit die Sicherheit erhöht. Fahrzeuginformationen sind dabei Informationen über den Zustand des Fahrzeugs, welche beispielsweise in einem Steuergerät des Fahrzeugs und/oder auf einem Fahrzeug-Bussystem vorliegen.

Weiter wird für die Sicherheitssignale mindestens eine Fahrzeuginformation von mindestens zwei unabhängigen Steuergeräten ausgewertet. Durch die Auswertung der Fahrzeuginformation(en) durch unabhängige Steuergeräte wird eine Sicherheit gegen einen Ausfall eines Steuergeräts verhindert. Dadurch kann vermieden werden, dass einzelne Steuergeräte besonders hohen Sicherheitsanforderungen genügen müssen. Auf aufwendige Sicherheitsvorkehrungen beispielsweise eine Zwei-Prozessor-Technik in einem Steuergerät kann verzichtet werden. Damit ist eine kostengünstige Ausführung der Steuergeräte möglich. Für die Auswertung können bereits im Fahrzeug vorhandene Steuergeräte genutzt werden. Daneben ist es denkbar, zusätzliche Steuergeräte für eine Lenksäulenverriegelung im Fahrzeug zu integrieren.

In einer bevorzugten Ausführungsform umfasst die Elektronik mindestens ein Schaltelement, wobei das Schaltelement bei gesetzten Sicherheitssignalen an den Anschlüssen durchschaltet und bei durchgeschaltetem Schaltelement die Antriebseinheit auf einen Anschluss für eine Spannungsversorgung gelegt ist. Eine Energieversorgung der Antriebseinheit und somit eine Bewegung des Sperrriegels erfolgt dabei nur, wenn beide Sicherheitssignale gesetzt sind. Das Schaltelement ist beispielsweise als Relais ausbildbar, wobei die Leitungen für die Anschlüsse der Sicherheitssignale mit unterschiedlichen Stromstärken treibbar sind.

In einer weiteren Ausführungsform ist die Spannungsversorgung an dem Anschluss in Abhängigkeit der Bedingungen zur Verriegelung zu- und abschaltbar ist. Damit kann unabhängig von den Sicherheitssignalen eine weitere Sicherheit gegen eine ungewünschte Verriegelung erzielt werden. Das Zu- und/oder Abschalten der Spannungsversorgung kann durch ein weiteres Steuergerät erfolgen, wobei in diesem ebenfalls Fahrzeuginformationen überprüfbar sein können.

In einer weiteren Ausführungsform werden als Fahrzeuginformationen mindestens ein Zustand der Klemme 15 (Zündung), eine Motordrehzahl und/oder eine Fahrzeuggeschwindigkeit ausgewertet. Durch die Berücksichtigung der Fahrzeuggeschwindigkeit wird verhindert, dass die Lenksäulenverriegelung greift, solange das Fahrzeug rollt.

In einer weiteren bevorzugten Ausführungsform wird mindestens ein Sicherheitssignal von einem Gateway-Steuergerät geliefert. Es ist bekannt, Fahrzeuge mit mindestens zwei Bussystemen auszubilden, beispielsweise einem Antriebs-Bussystem, welchem Steuergeräte des Antriebsstrangs zugeordnet sind, und einem Komfort-Bussystem, welchem Steuergeräte für eine komfortable Handhabung des Fahrzeugs zugeordnet sind. Hierzu zählen beispielsweise elektrische Fensterheber und/oder eine elektrische Sitzverstellung. Die Bussysteme werden im Regelfall getrennt ausgebildet, da an beide Systeme unterschiedliche Sicherheitsanforderungen und/oder Anforderungen an eine Geschwindigkeit der Datenübertragung gestellt werden. Für einen Austausch der Daten zwischen den Bussystemen ist ein Gateway-Steuergerät vorgesehen. Im Gateway-Steuergerät liegen somit alle Informationen der Bussysteme vor. Diese Informationen lassen sich für eine Generierung eines Sicherheitssignals nutzen. Als Bussysteme sind beispielsweise CAN-Bussysteme, FlexRay-Bussysteme oder Bussysteme mit drahtloser Datenübertragung denkbar. Das Gateway-Steuergerät liefert ein positives Sicherheitssignal, wenn die Zündung ausgeschaltet (Klemme 15), die Motordrehzahl Null und die Fahrzeuggeschwindigkeit kleiner einem Schwellwert ist. Informationen über Motordrehzahl und Fahrzeuggeschwindigkeit liegen bei aktivem Antriebs-Bussystem auf diesem vor. Bei deaktiviertem Antriebs-Bussystem lassen sich diese Informationen durch ein geeignetes Steuergerät auf das Komfort-Bussystem spiegeln.

In einer weiteren bevorzugten Ausführungsform wird mindestens ein Sicherheitssignal von einem Schaltermodul für die Lenksäule geliefert. Das Schaltermodul für die Lenksäule ist derart ausbildbar, dass es für eine Ansteuerung eines elektrischen Zündstartschalters nutzbar ist. Es verarbeitet hierfür die Informationen des Komfort-Bussystems. Das Schaltermodul für die Lenksäule liefert ein positives Sicherheitssignal, wenn die Zündung ausgeschaltet (Klemme 15) und die Fahrzeuggeschwindigkeit kleiner einem Schwellwert ist.

In einer weiteren bevorzugten Ausführungsform ist die Lenksäulenverriegelung in einen Sleep-Modus und/oder einen Standby-Modus überführbar und über eine serielle Datenleitung weckbar. Während der Fahrt wird die elektrische Lenksäulenverriegelung nicht benötigt. Zur Einsparung von Energie ist es daher zweckmäßig, die Lenksäulenverriegelung in einen Energiesparmodus zu versetzen. Je nach Ausbildung der Elektronik der Lenksäulenverriegelung kann es sich dabei um einen Sleep-Modus oder einen Standby-Modus handeln.

In einer weiteren bevorzugten Ausführungsform ist die Lenksäulenverriegelung durch ein Komfort-Steuergerät weckbar, wobei durch das Komfort-Steuergerät mindestens der Zustand der Sicherheitssignale überprüfbar ist. Das Komfort-Steuergerät ist vorzugsweise selbst deaktvierbar und durch Aktivität auf dem Komfort-Bussystem weckbar.

In einer weiteren Ausführungsform ist der Sperrriegel durch einen Sicherungsschieber in einer entriegelten Position fixierbar. Dadurch wird eine Selbstverriegelung der Lenksäule bei einer Zerstörung der Mechanik der Lenksäulenverriegelung verhindert und somit die Sicherheit weiter erhöht.

In einer weiteren bevorzugten Ausführungsform werden die Sicherheitssignale durch Hardware-Leitungen an die Elektronik übertragen.

Die Erfindung wird nachfolgend anhand eines bevorzugten Ausführungsbeispiels näher erläutert. Die Figuren zeigen:
- Fig. 1: eine schematische Darstellung einer elektrischen Lenksäulenverriegelung und
- Fig. 2: eine schematische Darstellung einer Einbindung der elektrischen Lenksäulenverriegelung in ein Fahrzeugsystem.

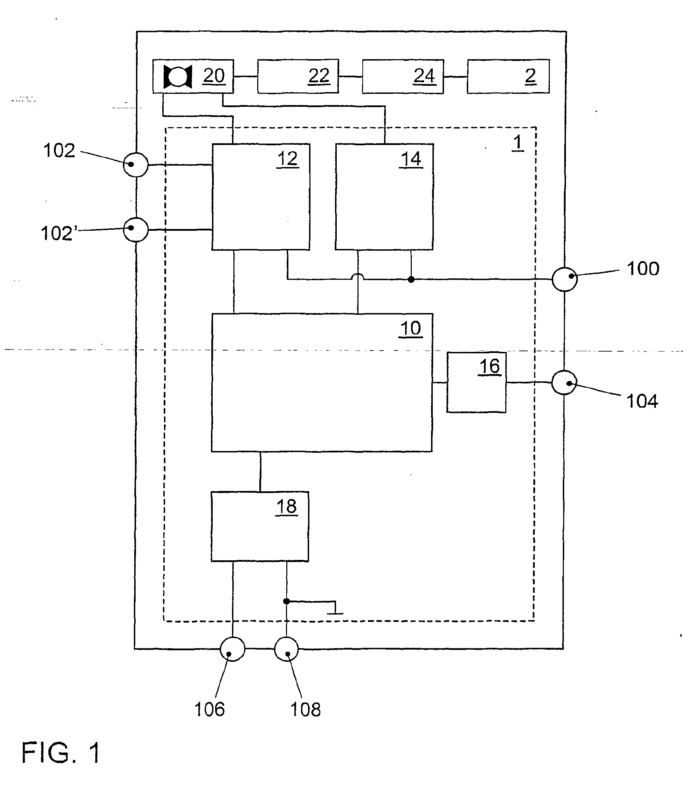

Fig. 1 zeigt schematisch eine elektrische Lenksäulenverriegelung, umfassend eine Elektronik 1, einen Sperrriegel 2, eine Antriebseinheit 20 für den Sperrriegel 2 und mechanische Komponenten 22, 24 für eine Bewegung des Sperrriegels 2. Die Elektronik 1 umfasst eine Recheneinheit 10, Schaltelemente 12, 14, eine serielle Schnittstelle 16 und einen Spannungsregler 18 und ist mit Anschlüssen 100, 102, 102', 104, 106, 108 ausgebildet.

Der Spannungsregler 18 ist über die Anschlüsse 106, 108 mit der Batteriespannung des Fahrzeugs und der Masse verbunden. Während der Fahrt wird die elektronische Lenksäulenverriegelung nicht benötigt. Um Energie einzusparen, wird die elektronische Lenksäulenverriegelung daher abgeschaltet. Für eine Aktivierung der elektronischen Lenksäulenverriegelung werden Signale über eine serielle Datenleitung an die Recheneinheit 10 übertragen. Die Elektronik 1 ist hierfür mit dem Anschluss 104 und der seriellen Schnittstelle 16 ausgebildet.

Eine elektrische Verriegelung soll aus Sicherheitsgründen nur durchführbar sein, wenn die Zündung abgeschaltet ist und die Fahrzeuggeschwindigkeit und die Motordrehzahl kleiner als bestimmte Schwellwerte sind. Die voneinander unabhängigen Schwellwerte liegen dabei bei Null oder nur unwesentlich über Null. Beispielsweise ist ein Schwellwert für die Fahrzeuggeschwindigkeit von 1 km/h denkbar. Diese Fahrzeuginformationen sind der Elektronik 1 durch Sicherheitssignale an den Anschlüssen 102, 102' zur Verfügung stellbar.

Für eine verbesserte Sicherheit wird die Verriegelung über diverse Redundanzen abgesichert. Eine Verriegelung ist nur möglich, wenn an Anschluss 100 eine Spannungsversorgung für die Antriebseinheit 20 angelegt ist. Der Spannungsversorgung der Antriebseinheit 20 sind die als Relais ausgebildeten Schaltelemente 12, 14 zum Verriegeln oder Entriegeln vorgeschaltet. Dabei erfolgt die Verriegelung über das Schaltelement 12 und das Entriegeln über das Schaltelement 14. Das Schaltelement 12 zum Verriegeln der Lenksäule ist abhängig von Sicherheitssignalen, welche an den Anschlüssen 102, 102' anliegen. Eine Schaltung der an Anschluss 100 angelegten Spannung auf die Antriebseinheit 20 erfolgt nur, wenn beide Sicherheitssignale an den Anschlüssen 102, 102' gesetzt sind. Die an den Anschlüssen 102, 102' anliegenden Sicherheitssignale sind voneinander unabhängig.

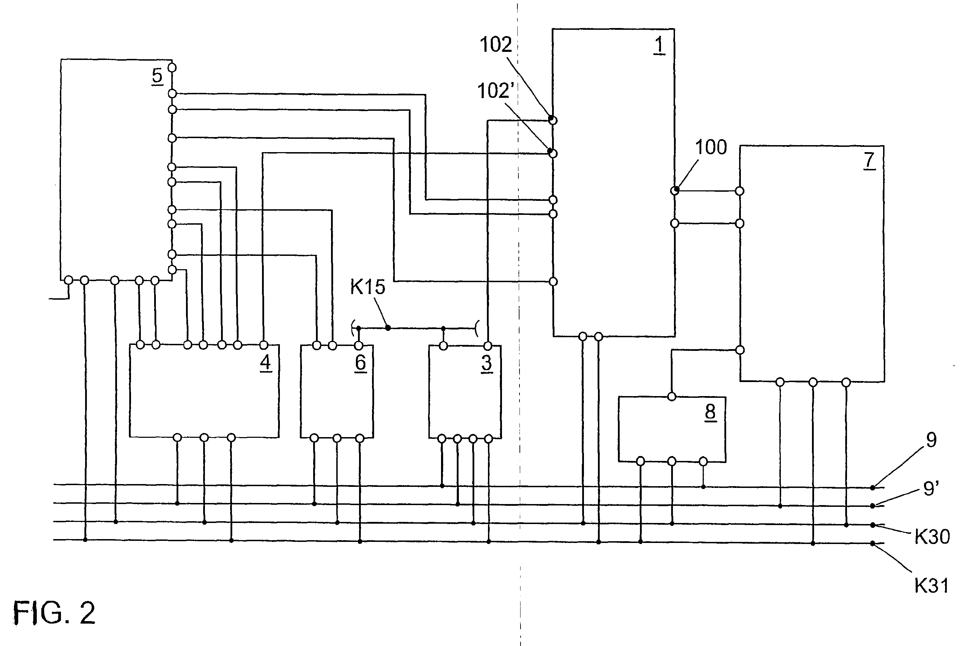

Die Sicherheitssignale an den Anschlüssen 102, 102' und die Spannungsversorgung an Anschluss 100 werden von in Fig. 2 dargestellten, unabhängigen Steuergeräten 3, 4, 7 geliefert.

Fig. 2 zeigt schematisch eine Einbindung der Elektronik 1 der elektrischen Lenksäulenverriegelung in ein Fahrzeugsystem, umfassend ein Gateway-Steuergerät 3, ein der Lenksäule zugeordnetes Schaltermodul 4, eine Elektronik 5 für einen elektrischen Zündschalter, ein Bordnetz-Steuergerät 6, ein Komfort-Steuergerät 7 und ein Bremsen-Steuergerät 8, ein Bussystem 9 eines Antriebsstrangs, ein Bussystem 9' für Komforteinrichtungen sowie die Leitungsstränge K30, K31 der Klemmen 30 (Batteriespannung) und 31 (Masse). Die Bussysteme 9, 9' sind beispielsweise als CAN-Bussysteme ausgebildet.

Anschluss 102 ist mit einem Gateway-Steuergerät 3 verbunden. Das Gateway-Steuergerät 3 ist mit dem Bussystem 9 des Antriebsstrangs, dem Bussystem 9' für Komforteinrichtungen sowie mit den Leitungssträngen K15, K30, K31 der Klemmen 15 (Zündung), 30 (Batteriespannung), 31 (Masse) verbunden. Im Gateway-Steuergerät 3 liegen somit vielfältige Informationen über den Zustand des Fahrzeugs vor. Im normalen Fahrbetrieb des Fahrzeugs wird durch das Gateway-Steuergerät 3 Klemme 31 (Masse) K31 auf den Anschluss 102 gelegt. Um das in Fig. 1 dargestellte Schaltelement 12 durchschalten zu können, wird Klemme 30 (Batteriespannung) K30 an Anschluss 102 benötigt. Eine abgefallene Leitung führt damit nicht zu einer Verriegelung der elektrischen Lenksäulenverriegelung. Um Klemme 30 K30 auf Anschluss 102 zu legen, werden verschiedene Bedingungen im Gateway-Steuergerät 3 überprüft. Zunächst muss die Zündung ausgeschaltet sein. Dieser Zustand wird dem Gateway-Steuergerät 3 durch die Verbindung zu Klemme 15 K15 signalisiert. Außerdem entnimmt das Gateway-Steuergerät 3 dem Antriebs-Bussystem 9 eine Motordrehzahl. Diese muss für ein Umschalten auf Klemme 30 K30 kleiner einem Schwellwert vorzugsweise gleich Null sein. Ist auf dem Antriebs-Bussystem 9 keine Information über die Motordrehzahl vorhanden, so muss für ein Umschalten bei einem CAN-Bussystem das entsprechende Veraltet-Bit gesetzt sein. Als weitere Bedingung für ein Anlegen der Klemme 30 K30 an den Anschluss 102 ist zu prüfen, ob die Fahrzeuggeschwindigkeit kleiner einem Schwellwert, beispielsweise kleiner 1 km/h, ist. Die Fahrzeuggeschwindigkeit muss für ein Umschalten auf Klemme 30 K30 auf dem Antriebs-Bussystem 9 vorhanden sein. Die Information darf auch nicht veraltet sein. Bei einem CAN-Bussystem ist die Aktualität über das entsprechende Veraltet-Bit überprüfbar. Wird die Zündung eingeschaltet und/oder überschreiten Motordrehzahl und/oder Fahrzeuggeschwindigkeit die entsprechenden Schwellwerte so wird der Anschluss 102 auf Klemme 31 K31 gelegt. Ein Anlegen von Klemme 31 K31 auf Anschluss 102 wird weiter durch eine Busruhe auf dem Antriebs-Bussystem 9 bewirkt. Um eine Verriegelung bei inaktivem Antriebs-Bussystem 9 zu bewirken, kann eine Stillstandsabfrage durchgeführt werden. Hierfür werden Informationen über Geschwindigkeiten auf das Komfort-Bussystem 9' gespiegelt und dem Gateway-Steuergerät 3 signalisiert, diese Informationen zu verwenden. Aus Sicherheitsgründen wird dabei eine Stillstandsabfrage vom Gateway-Steuergerät 3 erst akzeptiert, wenn die entsprechende Botschaft mehrfach aufeinanderfolgend eingegangen ist.

Anschluss 102' der Elektronik 1 ist mit einem Schaltermodul 4 für die Lenksäule verbunden. Das Schaltermodul kommuniziert unter anderem mit der Elektronik 5 eines elektrischen Zündschalters. Das Schaltermodul 4 ist eine Komforteinrichtung, es ist daher mit dem Komfort-Bussystem 9' verbunden, nicht jedoch mit dem Antriebs-Bussystem 9. Um das als Relais ausgebildete Schaltelement 12 der Elektronik 1 durchzuschalten, ist Klemme 30 K30 auf den Anschluss 102' zu legen. Im normalen Fahrbetrieb wird durch das Schaltermodul 4 Klemme 31 K31 auf den Anschluss 102' gelegt. Eine abgefallene Leitung bewirkt dabei ebenfalls, dass eine elektrische Verriegelung nicht durchgeführt werden kann. Dem Schaltermodul 4 stehen Informationen über die Zündung sowie die Fahrzeuggeschwindigkeit zur Verfügung.

Diese werden vom Schaltermodul 4 unabhängig vom Gateway-Steuergerät 3 ausgewertet.

Für eine zusätzliche Sicherheit werden die Sicherheitssignale an den Anschlüssen 102, 102' zum Schalten des in Fig. 1 dargestellten Schaltelements 12 durch ein weiteres Steuergerät überprüft. Diese Überprüfung erfolgt in der dargestellten Ausführungsform durch das Komfort-Steuergerät 7. Hierzu werden dem Komfort-Steuergerät 7 zunächst Informationen zugeleitet, ob die Sicherheitssignale an den Anschlüssen 102, 102' gesetzt sind. Sind die Sicherheitssignale gesetzt, so überprüft das Komfort-Steuergerät 7, ob die Bedingungen zum Setzen der Sicherheitssignale erfüllt sind. Hierfür nutzt das Komfort-Steuergerät 7 beispielsweise Informationen des Bremsen-Steuergeräts 8. Die Überprüfung der Verriegelungsbedingungen erfolgt unabhängig von den Ergebnissen des Gateway-Steuergeräts 3 und des Schaltermoduls 4. Nur wenn das Komfort-Steuergerät 7 ebenfalls zu dem Ergebnis kommt, dass die Bedingungen für eine elektrische Verriegelung erfüllt sind, legt es eine Spannung an den Anschluss 100 der Elektronik 1. Die Bedingungen für eine Verriegelung werden somit von drei unabhängigen Steuergeräten überprüft. Dadurch ist eine ausreichende Redundanz des Systems gewährleistbar.

Die elektrische Lenksäulenverriegelung ermöglicht es, das Zündanlassschloss räumlich getrennt von der Verriegelungseinrichtung anzuordnen. Dadurch lassen sich für das Zündanlassschloss neue Betätigungskonzepte und/oder Positionierungen im Fahrzeug realisieren. So ist es beispielsweise möglich, ein Betätigungskonzept zu realisieren, bei welchem der Schlüssel in das Zündanlassschloss gesteckt wird und nicht wie herkömmlich durch Drehen, sondern durch Drücken des Schlüssels die Zündung gestartet wird. Die Elektronik 1 der Lenksäulenverriegelung und die Elektronik 5 des Zündanlassschlosses stehen über verschiedene Leitungen in Verbindung. Die Möglichkeiten zur Positionierung des Zündanlassschlosses sind dabei allenfalls durch Beschränkungen betreffend der Länge der Leitungen zwischen den einzelnen Elementen beschränkt.

Die Elektronik 1 der elektrischen Lenksäulenverriegelung kann neben den in Fig. 1 dargestellten Elementen weitere Elemente enthalten. So ist es beispielsweise denkbar, eine Positionserkennung zu integrieren, durch welche die Position des Sperrriegels 2 erfassbar ist.

## Patentansprüche

1. Vorrichtung zur Lenksäulenverriegelung umfassend eine Elektronik, einen Sperrriegel, eine Antriebseinheit für den Sperrriegel und mindestens eine mechanische Komponente für eine Bewegung des Sperrriegels, wobei
die Elektronik (1) mit mindestens zwei Anschlüssen (102, 102') für unabhängige Sicherheitssignale ausgebildet ist,
eine Freischaltung der Verriegelung abhängig von den Sicherheitssignalen ist und
die Sicherheitssignale jeweils von mindestens einer Fahrzeuginformation abhängig sind,
**dadurch gekennzeichnet, dass**
für die Sicherheitssignale mindestens eine Fahrzeuginformation von mindestens zwei unabhängigen Steuergeräten (3, 4, 7) auswertbar ist.

2. Vorrichtung nach Anspruch 1, **dadurch gekennzeichnet, dass** die Elektronik (1) mindestens ein Schaltelement (12) umfasst, wobei das Schaltelement (12) bei gesetzten Sicherheitssignalen an den Anschlüssen (102, 102') durchschaltet und bei durchgeschaltetem Schaltelement (12) die Antriebseinheit (20) auf einen Anschluss (100) für eine Spannungsversorgung gelegt ist.

3. Vorrichtung nach Anspruch 2, **dadurch gekennzeichnet, dass** die Spannungsversorgung an dem Anschluss (100) in Abhängigkeit der Bedingungen zur Verriegelung zu- und abschaltbar ist.

4. Vorrichtung nach einem der Ansprüche 1 bis 3, **dadurch gekennzeichnet, dass** als Fahrzeuginformationen mindestens ein Zustand der Klemme 15 (Zündung), eine Motordrehzahl und/oder eine Fahrzeuggeschwindigkeit auswertbar ist.

5. Vorrichtung nach einem der Ansprüche 1 bis 4, **dadurch gekennzeichnet, dass** mindestens ein Sicherheitssignal von eine Gateway-Steuergerät (3) setzbar ist, wobei das Gateway-Steuergerät (3) ein positives Sicherheitssignal anlegt, wenn die Zündung ausgeschaltet (Klemme 15), die Motordrehzahl Null und die Fahrzeuggeschwindigkeit kleiner einem Schwellwert ist.

6. Vorrichtung nach einem der Ansprüche 1 bis 5, **dadurch gekennzeichnet, dass** mindestens ein Sicherheitssignal von einem Schaltermodul (4) für die Lenksäule setzbar ist, wobei das Schaltermodul (4) für die Lenksäule ein positives Sicherheitssignal anlegt, wenn die Zündung ausgeschaltet (Klemme 15) und die Fahrzeuggeschwindigkeit kleiner einem Schwellwert ist.

7. Vorrichtung nach einem der Ansprüche 1 bis 6, **dadurch gekennzeichnet, dass** die Lenksäulenverriegelung in einen Sleep-Modus und/oder einen Standby-Modus überführbar und über eine serielle Datenleitung weckbar ist.

8. Vorrichtung nach Anspruch 7, **dadurch gekennzeichnet, dass** die Lenksäulenverriegelung durch ein Komfort-Steuergerät (7) weckbar ist, wobei durch das Komfort-Steuergerät (7) mindestens der Zustand der Sicherheitssignale überprüfbar ist.

9. Vorrichtung nach einem der Ansprüche 1 bis 8, **dadurch gekennzeichnet, dass** der Sperrriegel (2) durch einen Sicherungsschieber in einer entriegelten Position fixierbar ist.

10. Vorrichtung nach einem der Ansprüche 1 bis 9, **dadurch gekennzeichnet, dass** die Sicherheitssignale durch Hardware-Leitungen an die Elektronik (1) übertragbar sind.

11. Verfahren zur Verriegelung einer Lenksäule mittels einer elektrischen Lenksäulenverriegelung, umfassend eine Elektronik, einen Sperrriegel, eine Antriebseinheit für den Sperrriegel und mindestens eine mechanische Komponente für eine Bewegung des Sperrriegels, wobei
an die Elektronik (1) an mindestens zwei Anschlüssen (102, 102') unabhängige Sicherheitssignale angelegt werden,
eine Freischaltung der Verriegelung abhängig von den Sicherheitssignalen erfolgt und
die Sicherheitssignale jeweils in Abhängigkeit mindestens einer
Fahrzeuginformation generiert werden,
**dadurch gekennzeichnet, dass**
für die Sicherheitssignale mindestens eine Fahrzeuginformation von mindestens zwei unabhängigen Steuergeräten (3, 4, 7) ausgewertet wird.

12. Verfahren nach Anspruch 11, **dadurch gekennzeichnet, dass** die Elektronik (1) mindestens ein Schaltelement (12) umfasst, wobei das Schaltelement (12) bei gesetzten Sicherheitssignalen an den Anschlüssen (102, 102') durchschaltet, und bei durchgeschaltetem Schaltelement (12) die Antriebseinheit (20) auf einen Anschluss (100) für eine Spannungsversorgung gelegt wird.

13. Verfahren nach Anspruch 12, **dadurch gekennzeichnet, dass** die Spannungsversorgung an dem Anschluss (100) in Abhängigkeit der Bedingungen zur Verriegelung zu- und abgeschaltet wird.

14. Verfahren nach einem der Ansprüche 11 bis 13, **dadurch gekennzeichnet, dass** an Fahrzeuginformationen mindestens ein Zustand der Klemme 15 (Zündung), eine Motordrehzahl und/oder eine Fahrzeuggeschwindigkeit ausgewertet werden.

15. Verfahren nach einem der Ansprüche 11 bis 14, **dadurch gekennzeichnet, dass** mindestens ein Sicherheitssignal von eine Gateway-Steuergerät (3) geliefert wird, wobei das Gateway-Steuergerät (3) ein positives Sicherheitssignal anlegt, wenn die Zündung ausgeschaltet (Klemme 15), die Motordrehzahl Null und die Fahrzeuggeschwindigkeit kleiner einem Schwellwert ist.

16. Verfahren nach einem der Ansprüche 11 bis 15, **dadurch gekennzeichnet, dass** mindestens ein Sicherheitssignal von einem Schaltermodul (4) für die Lenksäule geliefert wird, wobei das Schaltermodul (4) für die Lenksäule ein positives Sicherheitssignal anlegt, wenn die Zündung ausgeschaltet (Klemme 15) und die Fahrzeuggeschwindigkeit kleiner einem Schwellwert ist.

17. Verfahren nach einem der Ansprüche 11 bis 16, **dadurch gekennzeichnet, dass** die Lenksäulenverriegelung in einen Sleep-Modus und/oder einen Standby-Modus übergeführt wird und bei Bedarf über eine serielle Datenleitung geweckt wird.

18. Verfahren nach Anspruch 17, **dadurch gekennzeichnet, dass** die Lenksäulenverriegelung durch ein Komfort-Steuergerät (7) geweckt wird, wobei durch das Komfort-Steuergerät (7) mindestens der Zustand der Sicherheitssignale überprüft werden.

19. Verfahren nach einem der Ansprüche 11 bis 18, **dadurch gekennzeichnet, dass** der Sperrriegel (2) durch einen Sicherungsschieber in einer entriegelten Position fixiert wird.

20. Verfahren nach einem der Ansprüche 11 bis 19, **dadurch gekennzeichnet, dass** die Sicherheitssignale durch Hardware-Leitungen an die Elektronik (1) übertragen werden.

## Claims

1. Device for locking a steering column, comprising an electronic system, a locking bar, a drive unit for the locking bar and at least one mechanical component for moving the locking bar, wherein the electronic system (1) is embodied with at least two connections (102, 102') for independent safety signals, the locking means is enabled as a function of the safety signals and the safety signals are each dependent on at least one item of vehicle information, **characterized in that** for the safety signals at least one item of vehicle information can be evaluated by at least two independent control devices (3, 4, 7).

2. Device according to Claim 1, **characterized in that** the electronic system (1) comprises at least one switching element (12), wherein the switching element (12) connects through when safety signals are set at the connections (102, 102'), and when the switching element (12) is connected through the drive unit (20) is connected to a connection (100) for a voltage supply.

3. Device according Claim 2, **characterized in that** the voltage supply at the connection (100) can be switched on and off as a function of the conditions for locking.

4. Device according to one of Claims 1 to 3, **characterized in that** at least one state of the terminal 15 (ignition), an engine speed and/or a vehicle speed can be evaluated as vehicle information.

5. Device according to one of Claims 1 to 4, **characterized in that** at least one safety signal can be set by a gateway control device (3), wherein the gateway control device (3) applies a positive safety signal if the ignition is switched off (terminal 15), the engine speed is zero and the speed of the vehicle is lower than a threshold value.

6. Device according to one of Claims 1 to 5, **characterized in that** at least one safety signal can be set by a switch module (4) for the steering column, wherein the switch module (4) for the steering column applies a positive safety signal if the ignition is switched off (terminal 15) and the speed of the vehicle is lower than a threshold value.

7. Device according to one Claims 1 to 6, **characterized in that** the steering column locking means can be placed in a sleep mode and/or a standby mode and can be woken up via a serial data line.

8. Device according to Claim 7, **characterized in that** the steering column locking means can be woken up by means of a comfort control device (7), wherein at least the state of the safety signals can be checked by means of the comfort control device (7).

9. Device according to one of Claims 1 to 8, **characterized in that** the locking bar (2) can be secured in an unlocked position by means of a securing slide.

10. Device according to one of Claims 1 to 9, **characterized in that** the safety signals can be transmitted to the electronic system (1) by means of hardware lines.

11. Method for locking a steering column by means of an electrical steering column locking means, comprising an electronic system, a locking bar, a drive unit for the locking bar and at least one mechanical component for moving the locking bar, wherein independent safety signals are applied to the electronic system (1) at at least two connections (102, 102'), the locking is enabled as a function of the safety signals and the safety signals are generated in each case as a function of at least one item of vehicle information, **characterized in that** for the safety signals at least one item of vehicle information is evaluated by at least two independent control devices (3, 4, 7).

12. Method according to Claim 11, **characterized in that** the electronic system (1) comprises at least one switching element (12), wherein the switching element (12) connects through when safety signals are set at the connections (102, 102'), and when the switching element (12) is connected through the drive unit (20) is connected to a connection (100) for a voltage supply.

13. Method according to Claim 12, **characterized in that** the voltage supply at the connection (100) is switched on and off as a function of the conditions for locking.

14. Method according to one of Claims 11 to 13, **characterized in that** at least one state of the terminal 15 (ignition), an engine speed and/or a vehicle speed are evaluated as vehicle information.

15. Method according to one of Claims 11 to 14, **characterized in that** at least one safety signal is supplied by a gateway control device (3), wherein the gateway control device (3) applies a positive safety signal if the ignition is switched off (terminal 15), the engine speed is zero and the speed of the vehicle is lower than a threshold value.

16. Method according to one of Claims 11 to 15, **characterized in that** at least one safety signal is supplied by a switch module (4) for the steering column, wherein the switch module (4) for the steering column applies a positive safety signal if the ignition is switched off (terminal 15) and the speed of the vehicle is lower than the threshold value.

17. Method according to one of Claims 11 to 16, **characterized in that** the steering column locking means is placed in a sleep mode and/or a standby mode and is woken up via a serial data line when necessary.

18. Method according to Claim 17, **characterized in that** the steering column locking means is woken up by means of a comfort control device (7), wherein at least the state of the safety signals is checked by means of the comfort control device (7).

19. Method according to one of Claims 11 to 18, **characterized in that** the locking bar (2) is secured in an unlocked position by means of a securing slide.

20. Method according to one of Claims 11 to 19, **characterized in that** the safety signals are transmitted to the electronic system (1) by means of hardware lines.

## Revendications

1. Dispositif de verrouillage d'une colonne de direction, qui comprend une électronique, un verrou, une unité d'entraînement du verrou et au moins un composant mécanique qui permet de déplacer le verrou, l'électronique (1) étant configurée avec deux bornes (102, 102') pour des signaux de sécurité indépendants,
un circuit de libération du verrouillage en fonction des signaux de sécurité,
les signaux de sécurité dépendant chacun d'au moins une information provenant du véhicule,
**caractérisé en ce que**
au moins une information provenant du véhicule peut être évaluée par au moins deux appareils indépendants (3, 4, 7) de commande des signaux de sécurité.

2. Dispositif selon la revendication 1, **caractérisé en ce que** l'électronique (1) comprend au moins un élément de commutation (12), l'élément de commutation (12) assurant le branchement lorsque les signaux de sécurité sont appliqués sur les bornes (102, 102'), l'unité d'entraînement (20) étant raccordée à une borne (100) d'alimentation en tension lorsque l'élément de commutation (12) assure le branchement.

3. Dispositif selon la revendication 2, **caractérisé en ce que** l'alimentation en tension de la borne (100) peut être branchée et débranchée pour assurer le verrouillage en fonction des conditions.

4. Dispositif selon l'une des revendications 1 à 3, **caractérisé en ce que** comme informations provenant du véhicule, au moins l'état de la borne (15) (allumage), le régime du moteur et/ou la vitesse du véhicule peuvent être évalués.

5. Dispositif selon l'une des revendications 1 à 4, **caractérisé en ce qu'**au moins un signal de sécurité peut être appliqué par un appareil (3) de commande de portail, l'appareil (3) de commande de portail appliquant un signal de sécurité positif lorsque l'allumage est débranché (borne 15), que le régime du moteur est nul et que la vitesse du véhicule est inférieure à une valeur de seuil.

6. Dispositif selon l'une des revendications 1 à 5, **caractérisé en ce qu'**au moins un signal de sécurité peut être appliqué par un module (4) de commutation de la colonne de direction, le module de commutation (4) de la colonne de direction appliquant un signal de sécurité positif lorsque l'allumage est débranché (borne 15) et que la vitesse du véhicule est inférieure à une valeur de seuil.

7. Dispositif selon l'une des revendications 1 à 6, **caractérisé en ce que** le verrouillage de la colonne de direction peut être transféré en mode de sommeil et/ou en mode d'attente et peut être réveillé par un conducteur de données série.

8. Dispositif selon la revendication 7, **caractérisé en ce que** le verrouillage de la colonne de direction peut être éveillé par un appareil de commande de confort (7), l'appareil de commande de confort (7) pouvant tester au moins l'état des signaux de sécurité.

9. Dispositif selon l'une des revendications 1 à 8, **caractérisé en ce que** le verrou (2) peut être immobilisé dans une position déverrouillée par un poussoir de protection.

10. Dispositif selon l'une des revendications 1 à 9, **caractérisé en ce que** les signaux de sécurité peuvent être transférés à l'électronique (1) par des conducteurs de l'électronique.

11. Procédé de verrouillage d'une colonne de direction au moyen d'un verrouillage électrique de colonne de direction qui comprend une électronique, un verrou, une unité d'entraînement du verrou et au moins un composant mécanique qui permet de déplacer le verrou,
des signaux de sécurité indépendants étant appliqués sur l'électronique (1) par au moins deux bornes (102, 102'),
dans lequel la libération du verrouillage s'effectue en fonction des signaux de sécurité, et
les signaux de sécurité étant formés chacun en fonction d'au moins une information provenant du véhicule,
**caractérisé en ce que**
au moins une information concernant le véhicule, est évaluée par au moins deux appareils indépendants (3, 4, 7) de commande des signaux de sécurité.

12. Procédé selon la revendication 11, **caractérisé en ce que** l'électronique (1) comprend au moins un élément de commutation (12), l'élément de commutation (12) assurant le branchement lorsque les signaux de sécurité sont appliqués sur les bornes (102, 102'), l'unité d'entraînement (20) étant raccordée à une borne (100) d'alimentation en tension lorsque l'élément de commutation (12) assure le branchement.

13. Procédé selon la revendication 12, **caractérisé en ce que** l'alimentation en tension de la borne (100) peut être branchée et débranchée pour assurer le verrouillage en fonction des conditions.

14. Procédé selon l'une des revendications 11 à 13, **caractérisé en ce que** comme informations provenant du véhicule, au moins l'état de la borne (15) (allumage), le régime du moteur et/ou la vitesse du véhicule peuvent être évalués.

15. Procédé selon l'une des revendications 11 à 14, **caractérisé en ce qu'**au moins un signal de sécurité peut être appliqué par un appareil (3) de commande de portail, l'appareil (3) de commande de portail appliquant un signal de sécurité positif lorsque l'allumage est débranché (borne 15), que le régime du moteur est nul et que la vitesse du véhicule est inférieure à une valeur de seuil.

16. Procédé selon l'une des revendications 11 à 15, **caractérisé en ce qu'**au moins un signal de sécurité peut être appliqué par un module (4) de commutation de la colonne de direction, le module de commutation (4) de la colonne de direction appliquant un signal de sécurité positif lorsque l'allumage est débranché (borne 15) et que la vitesse du véhicule est inférieure à une valeur de seuil.

17. Procédé selon l'une des revendications 11 à 16, **caractérisé en ce que** le verrouillage de la colonne de direction peut être transféré en mode de sommeil et/ou en mode d'attente et peut être réveillé par un conducteur de données série.

18. Procédé selon la revendication 17, **caractérisé en ce que** le verrouillage de la colonne de direction peut être éveillé par un appareil de commande de confort (7), l'appareil de commande de confort (7) pouvant tester au moins l'état des signaux de sécurité.

19. Procédé selon l'une des revendications 11 à 18, **caractérisé en ce que** le verrou (2) peut être immobilisé dans une position déverrouillée par un poussoir de protection.

20. Procédé selon l'une des revendications 11 à 19, **caractérisé en ce que** les signaux de sécurité peuvent être transférés à l'électronique (1) par des conducteurs de l'électronique.
